# EUROPÄISCHE PATENTSCHRIFT

(11) **EP 3 279 711 B1**
(45) Veröffentlichungstag und Bekanntmachung des Hinweises auf die Patenterteilung: **23.06.2021**
(21) Anmeldenummer: 17181164.9
(22) Anmeldetag: 13.07.2017
(51) Int. Cl.: G02B 6/42, B60Q 1/00

(54) **VERFAHREN ZUM EINSTELLEN EINES VON EINER KRAFTFAHRZEUGBELEUCHTUNGSVORRICHTUNG ABGESTRAHLTEN LICHTSTROMS UND EINE KRAFTFAHRZEUGBELEUCHTUNGSVORRICHTUNG ZUM ABSTRAHLEN DES EINGESTELLTEN LICHTSTROMS**
METHOD FOR ADJUSTING A BEAM OF LIGHT PRODUCED BY A MOTOR VEHICULAR ILLUMINATION DEVICE AND MOTOR VEHICULAR ILLUMINATION DEVICE FOR EMITTING THE ADJUSTED LUMINOUS FLUX
PROCÉDÉ DE RÉGLAGE D'UN FLUX LUMINEUX ÉMIS D'UN DISPOSITIF D'ÉCLAIRAGE DE VÉHICULE ET DISPOSITIF D'ÉCLAIRAGE DE VÉHICULE DESTINÉ À ÉMETTRE LE FLUX LUMINEUX RÉGLÉ

(30) Priorität: 03.08.2016 AT 507082016
(43) Veröffentlichungstag der Anmeldung: 07.02.2018
(73) Patentinhaber: ZKW Group GmbH, 3250 Wieselburg (AT)
(72) Erfinder: Petsch, Daniel, 3292 Gaming (AT)
(74) Vertreter: Patentanwaltskanzlei Matschnig & Forsthuber OG

(56) Entgegenhaltungen:
- EP-A2- 0 595 338
- EP-A2- 1 213 178
- DE-A1-102012 112 125
- DE-T5-112014 003 720
- JP-A- 2003 255 190
- US-A1- 2003 215 181
- US-A1- 2015 309 235

## Beschreibung

Die Erfindung betrifft ein Verfahren zum Einstellen eines von einer Kraftfahrzeugbeleuchtungsvorrichtung abgestrahlten Lichtstroms, wobei die Kraftfahrzeugbeleuchtungsvorrichtung zumindest eine Lichtquelle zur Erzeugung von Licht und eine der zumindest einen Lichtquelle zugeordnete Optikvorrichtung umfasst, wobei der zumindest einen Lichtquelle eine Hauptabstrahlachse zugeordnet ist, die Optikvorrichtung der zumindest einen Lichtquelle in Richtung der Hauptabstrahlachse nachgeordnet ist und zumindest eine Lichteinkoppelfläche aufweist, welche mit dem Licht beleuchtet wird und durch welche im Wesentlichen das gesamte Licht in die Optikvorrichtung eingekoppelt wird.

Weiters betrifft die Erfindung eine Kraftfahrzeugbeleuchtungsvorrichtung zum Abstrahlen des gemäß dem oben genannten Verfahren eingestellten Lichtstroms, wobei die Kraftfahrzeugbeleuchtungsvorrichtung zumindest eine Lichtquelle zur Erzeugung von Licht und eine der zumindest einen Lichtquelle zugeordnete Optikvorrichtung umfasst, wobei der zumindest einen Lichtquelle eine Hauptabstrahlachse zugeordnet ist und die Optikvorrichtung der zumindest einen Lichtquelle in Richtung der Hauptabstrahlachse nachgeordnet ist und zumindest eine Lichteinkoppelfläche umfasst, welche mit dem Licht beleuchtet ist, durch welche im Wesentlichen das gesamte Licht in die Optikvorrichtung einkoppelt und welche einen Mittelpunkt aufweist.

Darüber hinaus betrifft die Erfindung Kraftfahrzeug mit zumindest einer solchen Kraftfahrzeugbeleuchtungsvorrichtung.

Im Zusammenhang mit der vorliegenden Erfindung wird unter dem Begriff Hauptabstrahlachse eine Achse verstanden, entlang derer die Lichtstärke der entsprechenden Lichtquelle am größten (maximal) ist.

Lichtquellen Hersteller können über Projektlaufzeit - Herstellung von Kraftfahrzeugbeleuchtungsvorrichtungen (Kraftfahrzeugscheinwerfern) eines bestimmten Typs - nicht sicherstellen, dass die Lichtquellen immer dieselbe Helligkeit aufweisen. Erfahrungsgemäß können sich während der Herstellung der Scheinwerfer eines bestimmten Typs drei bis vier Sprünge in der Helligkeit der gelieferten Lichtquellen ereignen. Dabei kann sich die Helligkeit der Lichtquellen um ca. 15% je Sprung ändern, insbesondere steigen.

Ein möglicher Ansatz, um dem oben genannten Problem zu begegnen, besteht darin, die Helligkeit der Lichtquellen anzupassen. Im Fall von LEDs kann beispielsweise der LED Strom je nach Helligkeitsklasse eingestellt werden. Diese Einstellung kann zum Beispiel nach dem Prinzip: hellere LEDs - niedrigerer Strom erfolgen. Um die Helligkeit der Lichtquellen bei einem Kraftfahrzeugscheinwerfer auf die eben beschriebene Weise ändern zu können, sind zusätzliche Vorrichtungen, wie beispielsweise eine dimmbare Schaltung, Kodierwiderstände usw. bei einem Kraftfahrzeugscheinwerfer, notwendig. Die Kodierwiderstände beinhalten die Information, mit welchem Strom eine LED betrieben werden soll. Diese Information kann auf zwei Arten ausgelesen und umgesetzt werden. Einerseits kann der Kodierwiderstand ein Teil der elektronischen Schaltung selbst sein, die abhängig vom Widerstandswert einen bestimmten Strom einstellt. Anderseits können Widerstandswert und zugehörige Ströme im Steuergerät abgespeichert sein. Durch Auslesen (z.B. mittels eines Mikrokontrollers) und Vergleich kann der LED-Strom wiederum mithilfe eines Mikrokontrollers eingestellt werden. Eine solche Lösung ist aus einigen Gründen nachteilhaft: zum Beispiel da der Kodierwiderstand ein elektronisches Bauteil ist, muss er vor Überspannung geschützt werden. Fällt er aufgrund von Überspannung aus, wird kein oder ein falscher, beispielsweise ein zu hoher LED-Strom eingestellt und die entsprechende(n) LED(s) leuchtet(en) gar nicht oder zu schwach oder zu stark. Deshalb muss auch dieses Bauteil geschützt werden, was wiederum weitere zusätzliche Bauelemente erfordert. Darüber hinaus benötigt der Kodierwiderstand, um ausgelesen zu werden, einen Pin an dem verwendeten Stecker, weshalb eine Leitung auf der Leiterplatte/Platine vorgesehen werden sollte. Weiters werden die die LEDs tragenden Leiterplatten auf Kühlkörper aufgebracht. Diese weisen üblicherweise mehrere Einspeisestellen auf, die aufeinander abgestimmt werden müssen, wenn der LED-Strom verändert wird. Ein weiterer Nachteil des oben beschriebenen Dimmens, dass die einzelnen LEDs mit unterschiedlichen Strömen betrieben werden, die allesamt von dem ursprünglichen Strom unterschiedlich sind. Dadurch wird in dem System, welches z.B. in einem Lichtmodul eines Kraftfahrzeugscheinwerfers eingesetzt wird, ein neuer Arbeitspunkt definiert, der beispielsweise hinsichtlich der EM-Verträglichkeit aufs Neue getestet gehört.

Obendrein kann im Falle eines technischen Gebrechens ein Austausch der Lichtquellen beispielsweise der LEDs nach dem Produktionsende der Kraftfahrzeugscheinwerfer vonnöten sein. Wenn aber nur LEDs mit einer höheren Lichtausbeute zur Verfügung stehen, muss eine dimmbare Schaltung der oben beschriebenen Art eingesetzt werden. Wird keine dimmbare Schaltung eingebaut, dann kann es durch die verstrichene Zeitdauer zu großen Abweichungen in der Helligkeit zwischen den Kraftfahrzeugscheinwerfern oder zwischen den Teilen innerhalb eines Kraftfahrzeugscheinwerfers (seiner Lichtmodule oder gar innerhalb einzelner Lichtmodule) kommen. Dabei kann es passieren, dass der Kraftfahrzeugscheinwerfer die gesetzlichen Normen an die abgestrahlte Lichtverteilung nicht mehr erfüllt.

In DE 11 2014 003 720 T5 ist ein kleines Fahrzeugvorderlicht offenbart, das ein gewünschtes Lichtverteilungsmuster bereitstellen kann und das einschließt: eine Lichtquelle, die Licht abstrahlt; eine Lichtleiteinrichtung, welche das Licht, das von der Lichtquelle abgestrahlt wird, durch eine Einfallsoberfläche empfängt und leitet, um es von einer Abstrahloberfläche abzustrahlen; ein strahlungsoptisches System strahlt das so abgestrahlte Licht vor das Fahrzeug. Ein anderes Lichtverteilungssystem, mit einem vertikal bewegbaren faseroptischen Netz, ist in EP 0595 338 A2 beschrieben. Weitere Fahrzeugbeleuchtungsvorrichtungen sind in EP 1213 178 A2**,** US 2015/0309235 A1 und DE 10 2012 112 125 A1 offenbart. Die Aufgabe der vorliegenden Erfindung besteht darin, die oben beschriebenen Nachteile des Stands der Technik zu beseitigen und ein Verfahren sowie eine Kraftfahrzeugbeleuchtungsvorrichtung zu schaffen, die über lange Nutzungsdauer eines Kraftfahrzeugs eine gesetzeskonforme Lichtverteilung gewährleisten. Diese Aufgabe wird mit einem eingangs erwähnten Verfahren erfindungsgemäß dadurch gelöst, dass das Verfahren folgende Schritte aufweist:
a) Ermitteln eines Istwerts einer Beleuchtungsstärke, mit der die zumindest eine Lichteinkoppelfläche von der zumindest einen Lichtquelle beleuchtet wird,
b) Vergleichen des Istwerts mit einem vorgegebenen Sollwert,
c) Berechnen einer relativen Lage zwischen der zumindest einen Lichteinkoppelfläche und der zumindest einen Lichtquelle, indem der Istwert dem Sollwert gleichgesetzt wird, und
d) Bringen der zumindest einen Lichteinkoppelfläche und der zumindest einen Lichtquelle in die relative Lage, in welcher der Istwert der Beleuchtungsstärke dem Sollwert gleich ist, mittels Verschiebens der zumindest einen Lichteinkoppelfläche und der zumindest einen Lichtquelle relativ zueinander.

Es versteht sich, dass, obwohl in dem hier dargelegten Verfahren von einer Beleuchtungsstärke die Rede ist, auch andere photometrische Größen oder ihre radiometrische Analoga verwendet werden können. Es ist also einem Fachmann auf dem Gebiet der Lichttechnik durchaus zuzutrauen, dass er bei dem erfindungsgemäßen Verfahren andere Größen wie beispielsweise Lichtstrom, Lichtstärke o.Ä. benutzen kann, ohne dabei erfinderisch tätig werden zu müssen.

Das erfindungsgemäße Verfahren ermöglicht beispielsweise ein kostengünstiges Einstellen eines von einer Kraftfahrzeugbeleuchtungsvorrichtung abgestrahlten Lichtstroms. Dabei wird durch das Einstellen des abgestrahlten Lichtstroms ermöglicht, zum Beispiel unerwünschte Helligkeitsunterschiede innerhalb einer von der Kraftfahrzeugbeleuchtungsvorrichtung erzeugten Lichtverteilung zu verringern. Die unerwünschten Helligkeitsunterschiede können, wie oben erwähnt, zum Beispiel dann auftreten, wenn bei der Kraftfahrzeugbeleuchtungsvorrichtung unterschiedlich stark leuchtende LEDs eingesetzt werden. Das erfindungsgemäße Verfahren macht die Verwendung der oben beschriebenen dimmbaren Schaltungen nicht mehr notwendig.

Bei einer praxisbewahrten Ausführungsform der vorliegenden Erfindung, kann es mit Vorteil vorgesehen sein, dass die zumindest eine Lichteinkoppelfläche im Wesentlichen senkrecht zu der Hauptabstrahlachse orientiert ist, und im Schritt c) die zumindest eine Lichteinkoppelfläche im Wesentlichen senkrecht zur Hauptabstrahlachse orientiert wird.

Außerdem kann es zweckmäßig sein, wenn die zumindest eine Lichteinkoppelfläche im Wesentlichen senkrecht zu der Hauptabstrahlachse orientiert ist, wobei während des Verschiebens im Schritt d) die zumindest eine Lichteinkoppelfläche im Wesentlichen senkrecht zur Hauptabstrahlachse orientiert gehalten wird.

Der Istwert der Beleuchtungsstärke, mit der die zumindest eine Lichteinkoppelfläche beleuchtet wird, kann beispielsweise unter Zuhilfenahme von dem fotometrischen Grundgesetz ermittelt werden. Dabei kann die zumindest eine Lichtquelle beispielsweise als eine LED ausgebildet sein. Die typischerweise eine Leuchtfläche von ca. 1 - 2 mm aufweisenden LEDs haben zum Vorteil, dass ihr Abstrahlcharakteristikum in einer guten Näherung durch das des Lambert-Strahlers beschrieben werden kann. Dadurch wird das Ermitteln laut dem fotometrischen Grundgesetz vereinfacht. Darüber hinaus wird der Istwert der Beleuchtungsstärke in einer vorgegebenen Lage der zumindest einen Lichtquelle bezüglich der zumindest einen Lichteinkoppelfläche ermittelt. Die Lichteinkoppelfläche kann vorzugsweise plan (wie die Lichtaustrittsfläche einer LED) ausgebildet sein und kann dabei unterschiedliche Formen aufweisen. Sie kann rund, rechteckig oder sechseckig sein und eine charakteristische Größe, beispielsweise einen Durchmesser, von ca. 6 - 12 mm aufweisen. Die vorgegebene Lage wird im Zusammenhang mit der vorliegenden Erfindung als Ist- oder Nulllage bezeichnet. Die Nulllage kann beispielsweise dadurch charakterisiert sein, dass in der Nulllage die Hauptabstrahlachse die Lichteinkoppelfläche in dem Mittelpunkt durchstößt, beispielsweise mit der optischen Achse der Optikvorrichtung zusammenfällt. Der Istwert gibt an, wieviel Licht in die Optikvorrichtung eingekoppelt wird. Dabei kann die Optikvorrichtung beispielsweise als ein lichtleitendes Optikelement, z.B. als ein Lichtleiter oder als ein beispielsweise aus Silikon ausgebildeter Optikkörper ausgebildet sein. Eine solche Optikvorrichtung kann eine vorteilhafte Eigenschaft besitzen, dass das auf die Lichteinkoppelfläche einfallende Licht in die Optikvorrichtung ohne Verluste eingespeist und bis zu einem Teil der Optikvorrichtung, an dem das Licht ausgekoppelt wird, ebenfalls ohne Verluste übertragen werden kann. Die Menge des in die Optikvorrichtung eingekoppelten Lichts hängt mit der Menge des aus der Optikvorrichtung ausgekoppelten und ergo von der Kraftfahrzeugbeleuchtungsvorrichtung abgestrahlten Lichts zusammen. Durch Abweichungen in der Produktion der Lichtquellen (z.B. LEDs oder Laserlichtquellen) können der Istwert und die von der Kraftfahrzeugbeleuchtungsvorrichtung abgestrahlte Lichtmenge, wie oben erwähnt, mit der Zeit variieren. Um die Homogenität und /oder die gesetzlichen Vorgaben an die abgestrahlte Lichtverteilung zu gewährleisten, muss der Istwert an den vorgegebenen Sollwert angepasst werden. Diese Anpassung ist durch erfindungsgemäße Verfahrensschritte b) bis d) realisiert. Im Schritt c) kann beispielsweise mittels des fotometrischen Grundgesetzes und anhand der Informationen über die Größe und/oder die Form der Lichtquelle und/oder die durch die Lichtquelle erzeugte Leuchtdichte, die Ausgestaltung der Lichteinkoppelfläche der Optikvorrichtung und/oder die Nulllage der Lichteinkoppelfläche bezüglich der Lichtquelle die relative Lage zwischen der Lichteinkoppelfläche und der Lichtquelle berechnet werden. Beim Berechnen der relativen Lage wird der Istwert dem Sollwert im Wesentlichen gleichgesetzt und angenommen, dass die zumindest eine Lichteinkoppelfläche im Wesentlichen senkrecht zur Hauptabstrahlachse orientiert ist. Anschließend werden im Schritt d) die Lichteinkoppelfläche und die Lichtquelle in die relative Lage gebracht. Dabei werden die Lichteinkoppelfläche und die Lichtquelle relativ zueinander verschoben, sodass während des Verschiebens die zumindest eine Lichteinkoppelfläche im Wesentlichen senkrecht zur Hauptabstrahlachse der Lichtquelle orientiert gehalten wird.

Es kann mit Vorteil vorgesehen sein, dass die Kraftfahrzeugbeleuchtungsvorrichtung eine Mehrzahl von Lichtquellen umfasst, die Optikvorrichtung eine Mehrzahl von Lichteinkoppelflächen aufweist und jeder Lichtquelle genau eine Lichteinkoppelfläche zugeordnet ist, wobei jede Lichtquelle und ihr zugeordnete Lichteinkoppelfläche in eine relative Lage gemäß den Verfahrensschritten a) bis d) gebracht wird.

Dabei kann es sich bei den Lichtquellen um beispielsweise an einer Platine/Leiterplatte angeordnete LEDs handeln, denen eine beispielsweise aus Silikon ausgebildete Optik zugeordnet ist, in die das Licht von den LEDs eingespeist und mithilfe von Totalreflexion weitergeleitet wird. Dabei kann die Optikvorrichtung - die Optik - derart angeordnet und/oder ausgebildet sein, dass das von jeder LED in einen Kegel mit einem Öffnungswinkel von etwa 120° abgestrahlte Licht in die zu der LED zugeordnete Lichteinkoppelfläche direkt eingespeist wird. Ein weiterer Vorteil ist die Möglichkeit, unterschiedlich helle Lichtquellen in beispielsweise einer und derselben Kraftfahrzeugbeleuchtungsvorrichtung oder in einem und demselben Scheinwerfer zu verwenden.

Darüber hinaus kann es zweckdienlich sein, wenn das Verschieben in Schritt d) in einer senkrecht zu der Hauptabstrahlachse angeordneten Ebene erfolgt. Dabei können die derart verschobenen Lichtquelle(n) an einer zum Beispiel zum Tragen der Lichtquelle(n) vorgesehenen Halterung in der Kraftfahrzeugbeleuchtungsvorrichtung befestigt sein. Besonders vorteilhaft ist eine solche Verschiebung in dem oben kurz beschriebenen Beispiel der LEDs auf einer Platine. So kann die in dem Schritt c) berechnete relative Lage dafür verwendet werden, dass die Platine mit den "verschobenen" LEDs bestückt wird, sodass in einem montierten Zustand die LEDs und die den LEDs zugeordneten Lichteinkoppelflächen eines Lichtleiters, beispielsweise eines Silikonoptikkörpers, in einer relativen Lage angeordnet sind und alle Lichteinkoppelflächen mit einem gemäß Schritt c) berechneten Sollwert der Beleuchtungsstärke (oder einer anderen photometrischen Größe) beleuchtet werden.

Bei einer praxisbewahrten Lösung kann es vorgesehen sein, dass die zumindest eine Lichteinkoppelfläche einen Mittelpunkt umfasst, welcher einen Ist-Abstand zu der Hauptabstrahlachse aufweist, in Schritt c) zusätzlich ein Soll-Abstand des Mittelpunktes zu der Hauptabstrahlachse aus dem vorgegebenen Sollwert der Beleuchtungsstärke ermittelt und beim Berechnen der relativen Lage verwendet wird, und in Schritt d) zusätzlich der Mittelpunkt von der Hauptabstrahlachse um den Soll-Abstand beabstandet wird. Dadurch kann eine besonders günstige und schnelle Berechnung des Sollwerts erzielt werden. Der Ist-Abstand zu der Hauptabstrahlachse kann beispielsweise gleich Null sein. Dies kann beispielsweise der Fall sein, wenn die Lichtquellen als eine oder mehrere LEDs und die Lichteinkoppelfläche als eine oder mehrere beispielsweise plane Fläche eines Lichtleiters ausgebildet sind, in welche plane Fläche das Licht der entsprechenden LED(s) eingekoppelt wird.

Wie oben bereits angedeutet, kann es zweckmäßig sein, wenn von der zumindest einen Lichtquelle erzeugte Licht durch eine photometrische Größe beschrieben ist, welche entlang der Hauptabstrahlachse ihren größten Wert aufweist und in den Verfahrensschritten a), b) und d) verwendet wird.

Einen besonderen Vorteil kann sich ergeben, wenn die photometrische Größe eine Lichtstärke ist, wobei die Lichtstärke in den Verfahrensschritten a), b) und d) verwendet wird.

Darüber hinaus kann es vorteilhaft sein, wenn nach Schritt d) die zumindest eine Lichtquelle, vorzugsweise alle Lichtquellen, in der relativen Lage befestigt werden.

Des Weiteren ist die oben genannte Aufgabe durch eine Kraftfahrzeugbeleuchtungsvorrichtung gemäß Anspruch 9 gelöst.

Eine solche Kraftfahrzeugbeleuchtungsvorrichtung hat zum Vorteil, dass sie immer gleich starke Beleuchtung - mit der Soll-Beleuchtungsstärke - erzeugt und deshalb beispielsweise in einem Scheinwerfer mit anderen Kraftfahrzeugbeleuchtungsvorrichtungen und/oder Lichtmodulen eingesetzt werden kann, ohne dass z.B. die Homogenität der von dem Scheinwerfer abgestrahlten Lichtverteilung beeinträchtigt wird oder dass zu große Helligkeitsunterschiede innerhalb der Lichtverteilung entstehen, die die Gesetzmäßigkeit der Lichtverteilung verletzen. Ein weiterer Vorteil der erfindungsgemäßen Kraftfahrzeugbeleuchtungsvorrichtung ist, dass sie kostengünstig ist (z.B. im Vergleich zu Kraftfahrzeugbeleuchtungsvorrichtungen mit den dimmbaren Schaltungen). Es ist denkbar, dass eine Leiterplatte mit den beispielsweise als LEDs ausgebildeten Lichtquellen derart bestückt ist, dass sich die LEDs in der relativen Lage befinden, die gemäß dem erfindungsgemäßen Verfahren bestimmt wurde.

Es kann zweckmäßig sein, wenn in der Nulllage die zumindest eine Lichteinkoppelfläche im Wesentlichen senkrecht zu der Hauptabstrahlachse orientiert ist.

Außerdem kann es verteilhaft sein, wenn in der relativen Lage die zumindest eine Lichteinkoppelfläche im Wesentlichen senkrecht zu der Hauptabstrahlachse orientiert ist. Darüber hinaus kann es von Vorteil sein, wenn sich die Soll-Beleuchtungsstärke von der Nulllage-Beleuchtungsstärke insbesondere um ca. 20% bis 40%, vorzugsweise um ca. 30%, unterscheidet. Der Vorteil liegt darin, dass es mit solchen Abweichungen der in die Lichteinkoppelfläche eingekoppelten Lichtmenge auf Produktionsunterschiede der Lichtquellen, beispielsweise auf ihre Leistungssteigerung, abgestellt werden kann. Es wird verstanden, dass gemäß Beispiele, die nicht zur aktuellen Erfindung gehören, der prozentuelle Unterschied zwischen den Werten der Soll-Beleuchtungsstärke und der Nulllage-Beleuchtungsstärke auch kleiner als 10%, beispielsweise 5%, aber auch größer als 50%, beispielsweise 55% oder 60% sein kann. Darüber hinaus kann dieser unterschied jeden Wert in den oben angegebenen Intervallen annehmen, z.B. 37%, und hängt unter anderem mit dem Abstrahlungscharakteristikum der zur Verfügung stehenden LEDs.

Bei einer praxisbewährten Ausführungsform kann es vorgesehen sein, dass die Kraftfahrzeugbeleuchtungsvorrichtung eine Leiterplatte aufweist, die zumindest eine Lichtquelle, vorzugsweise alle Lichtquellen, als LEDs ausgebildet sind, und die LED(s) auf der Leiterplatte entsprechend der relativen Lage befestigt sind oder in ihrer Nulllage auf der Leiterplatte befestigt sind und die Leiterplatte in der Kraftfahrzeugbeleuchtungsvorrichtung entsprechend der relativen Lage verschoben und befestigt ist. Dabei heißt "entsprechend der relativen Lage", dass je nachdem welcher Fall auftritt, entweder die LEDs auf der Leiterplatte derart befestigt sind oder die mit den LEDs bestückte Leiterplatte in der Kraftfahrzeugbeleuchtungsvorrichtung derart befestigt ist, dass sich alle LEDs und die den LEDs zugehörigen Lichteinkoppelflächen in einer relativen Lage befinden.

Darüber hinaus, kann es zweckdienlich sein, wenn das von der zumindest einen Lichtquelle erzeugte Licht durch eine photometrische Größe beschrieben ist, welche entlang der Hauptabstrahlachse ihren größten Wert aufweist.

Darüber hinaus kann es vorteilhaft sein, wenn zum Beispiel die erfindungsgemäßen Kraftfahrzeugbeleuchtungsvorrichtungen sowohl in einem rechten als auch in einem linken Scheinwerfer eines Kraftfahrzeugs eingesetzt werden. Dadurch kann beispielsweise gewährleistet werden, dass keine sichtbaren Helligkeitsunterschiede zwischen dem linken und dem rechten Scheinwerfer entstehen.

Lichtabbildungssystem kann Lichtprojektions- und/oder Lichtreflexionssystem sein.

Die Erfindung wird nachstehend anhand beispielhafter nichteinschränkender Ausführungsformen näher erläutert, die in einer Zeichnung veranschaulicht sind. In dieser zeigt:
Fig. 1 ein Verfahren zum Einstellen eines von einer Kraftfahrzeugbeleuchtungsvorrichtung abgestrahlten Lichtstroms;
Fig. 2 eine schematische Darstellung eines Teils einer Kraftfahrzeugbeleuchtungsvorrichtung in einer perspektivischen Ansicht;
Fig. 3 einen vergrößerten Ausschnitt der schematischen Darstellung aus der Figur 2,
Fig. 4 eine Verteilung der eingekoppelten Beleuchtungsstärke in einer Nulllage zwischen einer Lichteinkoppelfläche und einer Lichtquelle, und
Fig. 5 eine Verteilung der eingekoppelten Beleuchtungsstärke in einer relativen Lage zwischen einer Lichteinkoppelfläche und einer Lichtquelle.

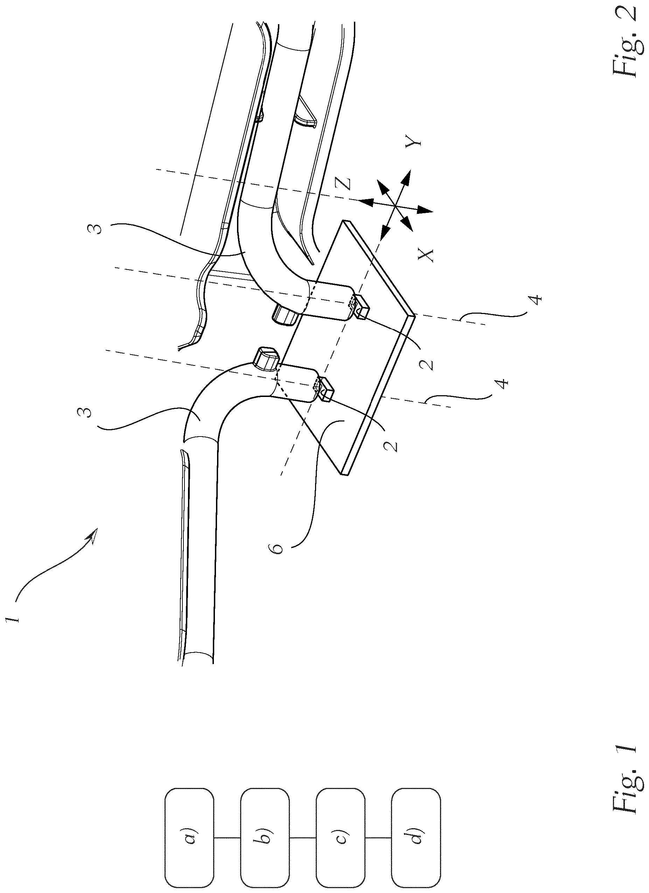

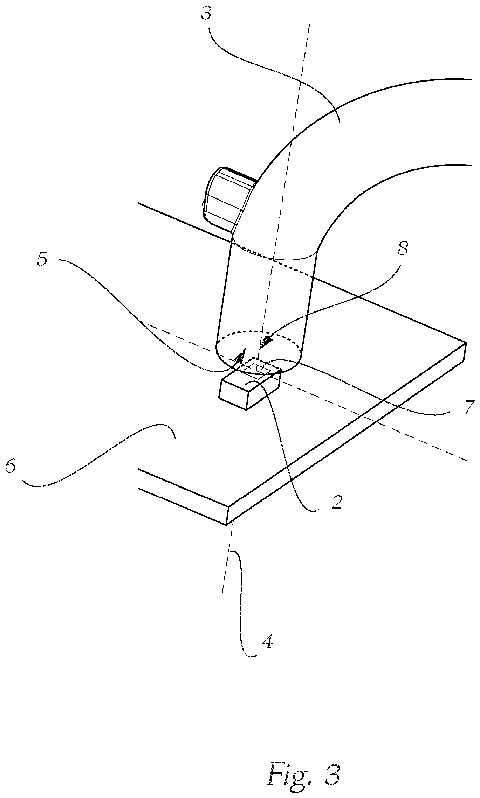

Zunächst wird auf die Figur 1 Bezug genommen. Dieser zeigt ein Flussdiagramm eines vier Schritte umfassenden Verfahrens zum Einstellen eines von einer Kraftfahrzeugbeleuchtungsvorrichtung 1 abgestrahlten Lichtstroms, wobei die Kraftfahrzeugbeleuchtungsvorrichtung zumindest eine Lichtquelle 2 zur Erzeugung von Licht und eine der zumindest einen Lichtquelle zugeordnete Optikvorrichtung 3 umfasst, wobei der zumindest einen Lichtquelle eine Hauptabstrahlachse 4 zugeordnet ist, die Optikvorrichtung 3 zumindest eine Lichteinkoppelfläche 5 aufweist (Fig. 3), welche mit dem Licht beleuchtet wird und durch welche im Wesentlichen das gesamte Licht in die Optikvorrichtung 3 eingekoppelt wird.

Ein Kraftfahrzeug kann beispielsweise eine inhomogene oder ungleichmäßig helle Lichtverteilung erzeugen, wenn ungleichmäßig helle Lichtquellen in Kraftfahrzeugbeleuchtungsvorrichtungen eingesetzt werden. So können beispielsweise in einem Kraftfahrzeuglichtmodul eingesetzte beispielsweise als LEDs ausgebildete Lichtquellen unterschiedlichen Lichtstrom erzeugen. Dies kann dazu führen, dass die von diesem Kraftfahrzeuglichtmodul abgestrahlte, beispielsweise segmentierte Lichtverteilung Bereiche, z.B. Segmente, unterschiedlicher Helligkeit aufweist. Infolgedessen sinkt die Qualität der erzeugten Lichtverteilung. In einem Extremfall, z.B. bei einer besonders stark leuchtenden LED, kann Überschreiten eines gesetzlich vorgeschriebenen Beleuchtungsstärkewertes der Lichtverteilung in einem Segment nicht ausgeschlossen werden. Dabei wird, wie im Stand der Technik bekannt ist, das Licht der Lichtquellen nicht direkt auf die Fahrbahn abgestrahlt, sondern durch Optikvorrichtungen in Form eben einer Lichtverteilung projiziert. Die Ausgestaltung solcher Optikvorrichtungen kann sehr unterschiedlich sein. Beispielhaft werden im Zusammenhang mit der vorliegenden Erfindung optische Lichtleiter betrachtet (siehe unten), in welche das Licht von beispielsweise als LEDs ausgebildeten Lichtquellen eingespeist wird. Dabei kann die in die Lichtleiter eingespeiste Lichtmenge verändert werden. Es sei an dieser Stelle betont, dass die Verwendung von LEDs und Lichtleitern nicht einschränkend ist. Erfindungsgemäß kann jede Art von Lichtquellen und Optikvorrichtungen eingesetzt werden. Beispielsweise kann die Optikvorrichtung als eine Linsenanordnung aus beispielsweise Sammel- und/oder Streulinsen und/oder achromatischen Linsen und/oder TIR-Linsen und/oder Spiegelelementen ausgebildet sein. Jede solche Optikvorrichtung weist unabhängig von ihrer Art zumindest eine Lichteinkoppelfläche, durch die das Licht in die Optikvorrichtung gelangt. Gemäß dem Stand der Technik ist/sind diese Lichteinkoppelfläche(n) in Bezug auf Lichtquelle(n) derart positioniert, dass das von den Lichtquelle(n) erzeugte Licht vorzugsweise ohne Verluste in die Optikvorrichtung eingekoppelt wird.

Das erfindungsgemäße Verfahren sieht dagegen vor, dass diese Verluste in kontrollierter Weise erhöht werden. Dadurch wird nur ein Teil der Lichtmenge einer heller leuchtenden Lichtquelle 2 (beispielsweise einer LED) in die Optikvorrichtung 3 eingekoppelt. Dabei bezieht sich der Begriff "heller leuchtend" entweder auf die anderen in derselben Kraftfahrzeugbeleuchtungsvorrichtung vorhandenen Lichtquellen oder auf die Lichtquellen in einer anderen Kraftfahrzeugbeleuchtungsvorrichtung desgleichen Kraftfahrzeugs. Hier kann/können zum Beispiel die Helligkeit der Lichtquelle(n) in einem linken und einem rechten Scheinwerfer verglichen werden. Wie oben erwähnt, ist zum Beispiel Ändern/Anpassen der Kodierwiderstände bei LED - Kraftfahrzeuglichtmodulen zwecks Dimmens nicht mehr notwendig, wenn die Verluste beim Einkoppeln des Lichts in die Optikvorrichtung(en) gezielt und kontrolliert geändert/angepasst werden können. Erfindungsgemäß wird im Schritt a) ein Istwert einer Beleuchtungsstärke ermittelt, mit der die zumindest eine Lichteinkoppelfläche 5 von der zumindest einen Lichtquelle 2 beleuchtet wird (Fig. 3).

Dieser Istwert hängt laut dem photometrischen Grundgesetz von dem von der zumindest einen Lichtquelle 2 erzeugten Lichtstrom ab. Es wird verstanden, dass die aus einer Optikvorrichtung 3 austretende und auf die Fahrbahn projizierte Lichtmenge mit der in die Optikvorrichtung eingekoppelten Lichtmenge zusammenhängt. Im Allgemeinen gilt: je mehr Licht eingekoppelt wird, umso mehr Licht tritt aus. Die Menge des Lichts, das von der Kraftfahrzeugbeleuchtungsvorrichtung 1 auf die Fahrbahn oder, wenn die Kraftfahrzeugbeleuchtungsvorrichtung nicht in einem Kraftfahrzeug eingebaut ist, sondern beispielsweise in einer Werkstatt getestet wird, auf einen vor der Kraftfahrzeugbeleuchtungsvorrichtung aufgestellten Messschirm abgestrahlt wird, lässt zum Beispiel auf die Menge des aus der/den Optikvorrichtung(en) austretenden Lichts und so auf den Istwert der Beleuchtungsstärke schließen. Ein vorgegebener theoretischer Wert ist ein Sollwert, den es zu erreichen gilt. Daher ist im Schritt b) des Verfahrens vorgesehen, dass der Istwert mit dem vorgegebenen Sollwert verglichen wird. Aus den bekannten Ist- und Sollwerten kann eine relative Lage (beispielsweise gemäß dem photometrischen Grundgesetz oder gemäß einer Computersimulation) zwischen der/den Lichtquelle(n) und der/den Lichteinkoppelfläche(n) berechnet werden, wobei zur Berechnung dieser relativen Lage der Istwert dem Sollwert gleichgesetzt wird (Schritt c)). Es wird verstanden, dass wenn der Vergleich des im Schritt a) ermittelten Istwerts mit dem vorgegebenen Sollwert eine Gleichung ergibt, kann Schritt c) ohne weiteres durchgeführt werden. In diesem Fall ist die Nulllage, das heißt die Lage, in der sich die Lichtquelle(n) bezüglich der Lichteinkoppelfläche(n) zu dem Zeitpunkt des Ermittelns des Istwerts der Beleuchtungsstärke befindet/befinden, gleich der relativen Lage ist. Weiters ist im Schritt d) des erfindungsgemäßen Verfahrens vorgesehen, dass die zumindest eine Lichteinkoppelfläche und die zumindest eine Lichtquelle in die relative Lage gebracht werden, in welcher der Istwert der Beleuchtungsstärke dem Sollwert gleich ist. Dies ist mittels eines Verschiebens der zumindest einen Lichteinkoppelfläche und der zumindest einen Lichtquelle relativ zueinander erreicht. Sollte, wie oben erwähnt, der Istwert dem Sollwert gleich sein, so ergibt sich zum Beispiel ein Verschieben um 0 mm.

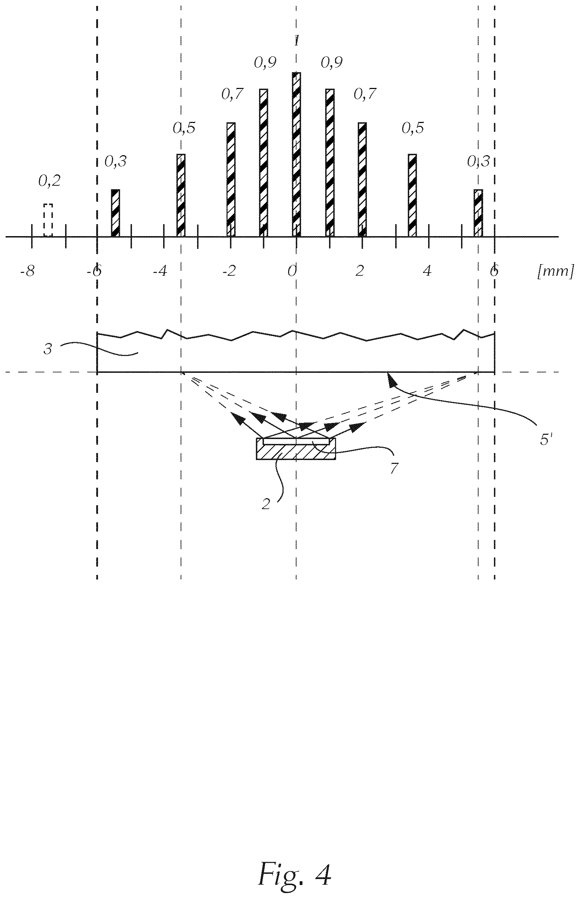

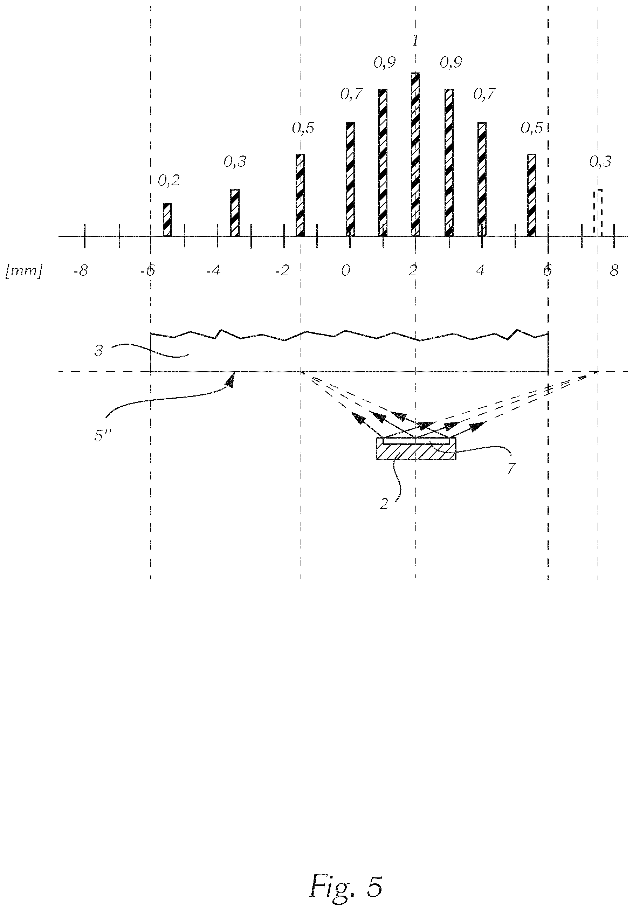

Figur 2 zeigt einen Ausschnitt einer beispielhaften Kraftfahrzeugbeleuchtungsvorrichtung 1 in einer perspektivischen Ansicht, bei welcher Kraftfahrzeugbeleuchtungsvorrichtung das erfindungsgemäße Verfahren seine Anwendung finden kann. Es sind ausschließlich Teile der Kraftfahrzeugbeleuchtungsvorrichtung schematisch gezeigt, welche bei der vorliegenden Erfindung oder bei einer ihrer Ausführungsformen eine Rolle spielen können. Natürlich weist eine einsatzfähige Kraftfahrzeugbeleuchtungsvorrichtung andere Teile auf, wie beispielsweise Kühlkörper, Tragrahmen, mechanische und/oder elektrische Stellvorrichtungen, Abdeckungen und so weiter und so fort. Der Einfachheit der Darstellung halber wird hier auf die Beschreibung dieser standardmäßigen Bauteile einer Kraftfahrzeugbeleuchtungsvorrichtung aber verzichtet. In der Figur 2 sind eine Platine 6 mit zwei LEDs 2, welche der Lichtquelle der vorliegenden Erfindung entsprechen können, und zwei in unterschiedliche Richtungen gebogene Lichtleiter 3, welche den Optikvorrichtungen des erfindungsgemäßen Verfahrens und/oder der erfindungsgemäßen Kraftfahrzeugbeleuchtungsvorrichtung entsprechen können. Jeder LED ist eine Hauptabstrahlachse 4 zugeordnet, die beispielsweise zu der (ebenen) Leuchtfläche 7 der entsprechenden LED senkrecht stehen kann. Im Allgemeinen kann es zweckmäßig sein, wenn die Hauptabstrahlachse 4 der Lichtquelle 2 derart zugeordnet ist, dass die von der Lichtquelle erzeugte Lichtstärke entlang dieser Achse am größten ist. Eine solche Zuordnung ist insbesondere für die LEDs günstig, welche sich bekannterweise in guter Näherung mit Lambertschen Strahlern beschreiben lassen, zumal die Lichtstärke eines Lambertschen Strahlers in eine zu der Abstrahlebene senkrecht stehenden Richtung maximal ist. Jeder Lichtleiter 3 weist eine der entsprechenden LED 2 in Richtung der Hauptabstrahlachse 4 nachgeordnete Lichteinkoppelfläche 5 auf. Zwar ist diese in der Figur 3 gezeigte Lichteinkoppelfläche 5 plan ausgebildet, kann diese nahezu beliebig ausgestaltet sein. Beispielsweise kann es bei den Lichtleitern 3 und den TIR-Linsen (nicht gezeigt) zweckdienlich sein, wenn die Lichteinkoppelfläche derart ausgebildet ist, dass das gesamte von der entsprechenden LED ausgesandte Licht in die Lichtleiter 3 oder in die TIR-Linse eingekoppelt wird, wobei das eingekoppelte Licht durch Totalreflexion an den Begrenzungsflächen des Lichtleiters (der Optik, z.B. der TIR-Linse) vom Austreten gehindert und dadurch weitergeleitet wird. Falls das Licht von einer Lichtquelle über eine Linse eingekoppelt wird, kann die Lichteinkoppelfläche auch konkav bzw. konvex ausgebildet sein. Besonders günstig ist es, wenn die Hauptabstrahlachse mit der Richtung der optischen Achse der Optikvorrichtung an der Lichteinkoppelfläche zusammenfällt (Richtung Z in Fig. 2). Es wird verstanden, dass es auch einem gebogenen Lichtleiter (Lichtwellenleiter) eine optische Achse (punktweise) zugeordnet werden kann. Diese ist der Propagationsrichtung der Wellen (an einem Punkt) im Lichtleiter gleich. Die in den Figuren 2 und 3 gezeigte Lage der LEDs 2 relativ zu den Lichteinkoppelflächen 5 entspricht der oben beschriebenen Nulllage. Dabei können die Lichtleiter 3 eine runde Lichteinkoppelfläche 5 von ca. 6 - 12 mm Durchmesser aufweisen. Die ca. 1 - 2 mm große Leuchtfläche 7 der LEDs ist plan ausgebildet und parallel zu der planen Lichteinkoppelfläche 5 des entsprechenden Lichtleiters 3 angeordnet. Dabei ist die Lichteinkoppelfläche 5 ca. 0,5 - 5 mm zu der Leuchtfläche 7 der entsprechenden LED beabstandet, in den beispielhaften Darstellungen der Figuren 4 und 5 befindet sich die LED jeweils im Abstand von 2 mm. Der Abstand ist in Form eines Luftspalts ausgebildet und dient unter anderem dazu, den Lichtleiter vor der Verlustwärme der LED zu schützen.

Eine Zusammenschau der Figuren 4 und 5 zeigt wie durch das Verschieben einer der LEDs 2, z.B. in der Ebene der Platine/Leiterplatte 6 (XY-Ebene in Figur 2), zu einer Reduktion der in den Lichtleiter 3 eingekoppelten Lichtmenge führt. Die Platine 6 kann beispielsweise um 2 mm in Z-Richtung von der LED beabstandet sein und kann mit den verschobenen LEDs bestückt sein. D.h. die LEDs können auf der Platine 6 nach dem Verschieben in die relative Lage in dieser Lage befestigt werden. Darüber hinaus können die LEDs an der ursprünglichen Position auf der Leiterplatte bestückt und befestigt werden und die gesamte Leiterplatte so verschoben werden, dass sich die LEDs im verschobenen Zustand der Leiterplatte in der relativen Lage zu den zugehörigen Lichteintrittsflächen befinden. Weiters kann die Leiterplatte nach dem Verschieben in der erreichten Position (entsprechend der relativen Lage der LEDs zu den zugehörigen Lichteintrittsflächen) befestigt werden. Im Allgemeinen kann es zweckdienlich sein, einen Abstand zwischen der Lichtquelle und der Lichteinkoppelfläche derart zu wählen, dass dieser in der Größenordnung der Größe der Lichteinkoppelfläche und der Leuchtfläche der Lichtquelle (beispielsweise der LED) liegt. Dabei ist es vorteilhaft, dass man beim Verschieben der Lichtquelle aus der Nulllage ein kontinuierliches allmähliches Absenken der eingekoppelten Lichtmenge erzielen kann. Wäre die Lichtquelle zu nah oder zu weit an der Lichteinkoppelfläche angeordnet, wäre der Abfall der eingekoppelten Lichtmenge zu abrupt und deshalb zu schwer zu kontrollieren. Darüber hinaus stellt eine an der Lichteinkoppelfläche zu nah angeordnete Lichtquelle eine Gefahr für einen Ausfall der Kraftfahrzeugbeleuchtungsvorrichtung dar, zumal diese den Lichtleiter an seiner Lichteinkoppelfläche über die zulässige Betriebstemperatur erhitzen könnte und infolgedessen zu einem technischen Ausfall der Kraftfahrzeugbeleuchtungsvorrichtung führen kann. Konkret zeigt die Figur 5 das Ergebnis, wenn eine der LEDs 2 horizontal (in Richtung X bzw. in Richtung Y in Figur 2) um 2 mm verschoben wird. Die (beispielsweise runde) Lichteinkoppelsfläche in einer Nulllage 5' ist schematisch in Figur 4 gezeigt. Dieselbe Lichteinkoppelsfläche aber in einer relativen Lage 5" ist in Fig. 5 gezeigt. Aus einem Vergleich der oberen Abschnitte der Figuren 4 und 5 ist ersichtlich, wie sich die in den Lichtleiter 3 eingekoppelte Lichtmenge verändert, wenn die Lichteinkoppelsfläche aus der Nulllage 5' verschoben wird. Dabei bleibt die Hauptabstrahlachse der LED immer noch parallel zu der Richtung der optischen Achse des Lichtleiters an der Lichteinkoppelfläche, fällt allerdings mit dieser nicht mehr zusammen (wie dies in der Nulllage der Fall war). Diese ausgelenkte Position der LED hinsichtlich des Mittelpunkts 8 der Lichteinkoppelfläche 5 des Lichtleiters 3 kann der relativen Lage der vorliegenden Erfindung entsprechen. Zur Veranschaulichung ist eine Intensitätsverteilung des auf die Lichteinkoppelsfläche des Lichtleiters einfallenden Lichts einer LED 2 in den oberen Bereichen der Figuren 4 und 5 gezeigt. Das von der LED 2 abgestrahlte Licht ist schematisch mit Pfeilen in den Figuren 4 und 5 dargestellt. Die Intensitätsverteilung entspricht im Wesentlichen dem Lambertschen Gesetz. In der Figur 5 ist zum Beispiel deutlich erkennbar, dass ein großer Teil des mit 0,3 der maximalen Intensität abgestrahlten Lichts an der Lichteinkoppelsfläche in der relativen Lage 5" vorbeikommt und nicht eingekoppelt wird. Dieses nicht eingekoppelte Licht kann beispielsweise mittels Blenden, Spiegeln oder weiteren optischen Bauteilen abgeblockt oder umgelenkt werden, sodass es sich zum Beispiel nicht entlang der Hauptabstrahlachse ausbreitet. Es wird verstanden, dass die LEDs ohne Weiters auch in andere Richtungen entlang der Platine 6 (Superposition von X- und Y-Bewegungen) bewegt werden können. Im Allgemeinen aber sind Lichtquellen denkbar, welche auch entlang der Z-Richtung (Fig. 2) verschoben werden können oder um die X- und/oder Y- und/oder Z-Richtung geschwenkt werden können.

## Patentansprüche

1. Verfahren zum Einstellen eines von einer Kraftfahrzeugbeleuchtungsvorrichtung (1) abgestrahlten Lichtstroms, wobei die Kraftfahrzeugbeleuchtungsvorrichtung zumindest eine Lichtquelle (2) zur Erzeugung von Licht und eine der zumindest einen Lichtquelle (2) zugeordnete Optikvorrichtung (3) umfasst, wobei
der zumindest einen Lichtquelle (2) eine Hauptabstrahlachse (4) zugeordnet ist,
die Optikvorrichtung (3) der zumindest einen Lichtquelle (2) in Richtung der Hauptabstrahlachse (4) nachgeordnet ist und zumindest eine Lichteinkoppelfläche (5) aufweist, welche mit dem Licht beleuchtet wird und durch welche im Wesentlichen das gesamte Licht in die Optikvorrichtung (3) eingekoppelt wird,
**gekennzeichnet durch** folgende Schritte:
a) Ermitteln eines Istwerts einer Beleuchtungsstärke, mit der die zumindest eine Lichteinkoppelfläche (5) von der zumindest einen Lichtquelle (2) beleuchtet wird,
b) Vergleichen des Istwerts mit einem vorgegebenen Sollwert,
c) Berechnen einer relativen Lage zwischen der zumindest einen Lichteinkoppelfläche (5) und der zumindest einen Lichtquelle (2), indem der Istwert dem Sollwert gleichgesetzt wird, und
d) Bringen der zumindest einen Lichteinkoppelfläche (5) und der zumindest einen Lichtquelle (2) in die relative Lage, in welcher der Istwert der Beleuchtungsstärke dem Sollwert gleich ist, mittels Verschiebens der zumindest einen Lichteinkoppelfläche (5) und der zumindest einen Lichtquelle (2) relativ zueinander.

2. Verfahren nach Anspruch 1, **dadurch gekennzeichnet, dass** die zumindest eine Lichteinkoppelfläche (5) im Wesentlichen senkrecht zu der Hauptabstrahlachse (4) orientiert ist, und im Schritt c) die zumindest eine Lichteinkoppelfläche (5) im Wesentlichen senkrecht zur Hauptabstrahlachse (4) orientiert wird.

3. Verfahren nach Anspruch 1 und 2, **dadurch gekennzeichnet, dass** die zumindest eine Lichteinkoppelfläche (5) im Wesentlichen senkrecht zu der Hauptabstrahlachse (4) orientiert ist, wobei während des Verschiebens im Schritt d) die zumindest eine Lichteinkoppelfläche (5) im Wesentlichen senkrecht zur Hauptabstrahlachse (4) orientiert gehalten wird.

4. Verfahren nach einem der Ansprüche 1 bis 3, **dadurch gekennzeichnet, dass** die Kraftfahrzeugbeleuchtungsvorrichtung (1) eine Mehrzahl von Lichtquellen (2) umfasst, die Optikvorrichtung (3) eine Mehrzahl von Lichteinkoppelflächen (5) aufweist und jeder Lichtquelle (2) genau eine Lichteinkoppelfläche (5) zugeordnet ist, wobei jede Lichtquelle (2) und ihr zugeordnete Lichteinkoppelfläche (5) in eine relative Lage gemäß den Verfahrensschritten a) bis d) gebracht wird.

5. Verfahren nach einem der Ansprüche 1 bis 4, **dadurch gekennzeichnet, dass** das Verschieben in Schritt d) in einer senkrecht zu der Hauptabstrahlachse (4) angeordneten Ebene erfolgt.

6. Verfahren nach einem der Ansprüche 1 bis 5, **dadurch gekennzeichnet, dass** die zumindest eine Lichteinkoppelfläche (5) einen Mittelpunkt (8) umfasst, welcher einen Ist-Abstand zu der Hauptabstrahlachse (4) aufweist, in Schritt c) zusätzlich ein Soll-Abstand des Mittelpunktes (8) zu der Hauptabstrahlachse (4) aus dem vorgegebenen Sollwert der Beleuchtungsstärke ermittelt und beim Berechnen der relativen Lage verwendet wird, und in Schritt d) zusätzlich der Mittelpunkt (8) von der Hauptabstrahlachse (4) um den Soll-Abstand beabstandet wird.

7. Verfahren nach einem der Ansprüche 1 bis 6, **dadurch gekennzeichnet, dass** das von der zumindest einen Lichtquelle (2) erzeugte Licht durch eine photometrische Größe beschrieben ist, welche entlang der Hauptabstrahlachse (4) ihren größten Wert aufweist und in den Verfahrensschritten a), b) und d) verwendet wird, wobei die photometrische Größe vorzugsweise eine Lichtstärke ist, wobei die Lichtstärke in den Verfahrensschritten a), b) und d) verwendet wird.

8. Verfahren nach einem der Ansprüche 1 bis 6, **gekennzeichnet durch zusätzliche weitere Schritte:** Schritt e) Befestigen der zumindest einen Lichtquelle (2) in der relativen Lage.

9. Kraftfahrzeugbeleuchtungsvorrichtung zum Abstrahlen eines gemäß dem Verfahren nach einem der Ansprüche 1 bis 8 eingestellten Lichtstroms umfassend zumindest eine Lichtquelle (2) zur Erzeugung von Licht und eine der zumindest einen Lichtquelle (2) zugeordnete Optikvorrichtung (3), wobei
- der zumindest einen Lichtquelle (2) eine Hauptabstrahlachse (4) zugeordnet ist,
- die Optikvorrichtung (3) der zumindest einen Lichtquelle (2) in Richtung der Hauptabstrahlachse (4) nachgeordnet ist und zumindest eine Lichteinkoppelfläche (5) umfasst, welche mit dem Licht beleuchtet ist, durch welche im Wesentlichen das gesamte Licht in die Optikvorrichtung (3) einkoppelt, wobei
- die zumindest eine Lichtquelle (2) und die zumindest eine Lichteinkoppelfläche (5) aus ihrer Nulllage in eine relative Lage ausgelenkt sind, wobei in der Nulllage die Hauptabstrahlachse (4) die Lichteinkoppelfläche (5) in einem Mittelpunkt (8) der Letzteren durchstößt und die Lichteinkoppelfläche (5) mit einer Nulllage-Beleuchtungsstärke beleuchtet ist und in der relativen Lage der Mittelpunkt (8) von der Hauptabstrahlachse (4) um einen Abstand beabstandet ist und die Lichteinkoppelfläche (5) mit einer vorgegebenen Soll-Beleuchtungsstärke beleuchtet ist, **dadurch gekennzeichnet, dass** die Soll-Beleuchtungsstärke um 10% bis 50% kleiner ist als die Nulllage-Beleuchtungsstärke

10. Kraftfahrzeugbeleuchtungsvorrichtung nach Anspruch 9, **dadurch gekennzeichnet, dass** in der Nulllage die zumindest eine Lichteinkoppelfläche (5) im Wesentlichen senkrecht zu der Hauptabstrahlachse (4) orientiert ist.

11. Kraftfahrzeugbeleuchtungsvorrichtung nach Anspruch 9 oder 10, **dadurch gekennzeichnet, dass** in der relativen Lage die zumindest eine Lichteinkoppelfläche (5) im Wesentlichen senkrecht zu der Hauptabstrahlachse (4) orientiert ist.

12. Kraftfahrzeugbeleuchtungsvorrichtung nach Anspruch 9, **dadurch gekennzeichnet, dass** sich die Soll-Beleuchtungsstärke von der Nulllage-Beleuchtungsstärke um ca. 20% bis 40%, vorzugsweise um ca. 30%, unterscheidet.

13. Kraftfahrzeugbeleuchtungsvorrichtung nach einem der Ansprüche 9 bis 12, **dadurch gekennzeichnet, dass** die Kraftfahrzeugbeleuchtungsvorrichtung (1) eine Leiterplatte (6) aufweist, die zumindest eine Lichtquelle (2), vorzugsweise alle Lichtquellen, als LEDs ausgebildet sind, und die LED(s) auf der Leiterplatte (6) entsprechend der relativen Lage befestigt sind oder in ihrer Nulllage auf der Leiterplatte (6) befestigt sind und die Leiterplatte (6) in der Kraftfahrzeugbeleuchtungsvorrichtung (1) entsprechend der relativen Lage verschoben und befestigt ist.

14. Kraftfahrzeugbeleuchtungsvorrichtung nach einem der Ansprüche 9 bis 13, **dadurch gekennzeichnet, dass** das von der zumindest einen Lichtquelle (2) erzeugte Licht durch eine photometrische Größe beschrieben ist, welche entlang der Hauptabstrahlachse (4) ihren größten Wert aufweist, wobei die photometrische Größe vorzugsweise eine Lichtstärke ist.

15. Kraftfahrzeug mit zumindest einer Kraftfahrzeugbeleuchtungsvorrichtung nach einem der Ansprüche 9 bis 14.

## Claims

1. Method for adjusting a luminous flux emitted by a motor vehicle lighting device (1), the motor vehicle lighting device comprising at least one light source (2) for generating light and an optical device (3) associated with the at least one light source (2), wherein the at least one light source (2) is associated with a main radiation axis (4), the optical device (3) is arranged downstream of the at least one light source (2) in the direction of the main radiation axis (4) and has at least one light coupling surface (5) which is illuminated with the light and through which substantially all of the light is coupled into the optical device (3), **characterized by** the following steps:
a) determining an actual value of an illumination intensity with which the at least one light coupling surface (5) is illuminated by the at least one light source (2),
b) comparing the actual value with a predetermined desired value,
c) calculating a relative position between the at least one light coupling surface (5) and the at least one light source (2) by equating the actual value to the setpoint value, and
d) bringing the at least one light coupling surface (5) and the at least one light source (2) into the relative position in which the actual value of the illuminance is equal to the desired value, by means of displacing the at least one light coupling surface (5) and the at least one light source (2) relative to one another.

2. Method according to claim 1, **characterized in that** the at least one light input surface (5) is oriented essentially perpendicular to the main radiation axis (4), and in step c) the at least one light input surface (5) is oriented essentially perpendicular to the main radiation axis (4).

3. Method according to claims 1 and 2, **characterized in that** the at least one light input surface (5) is oriented substantially perpendicular to the main radiation axis (4), wherein during the displacement in step d) the at least one light input surface (5) is kept oriented substantially perpendicular to the main radiation axis (4).

4. Method according to one of claims 1 to 3, **characterized in that** the motor vehicle lighting device (1) comprises a plurality of light sources (2), the optical device (3) has a plurality of light input surfaces (5) and each light source (2) is assigned precisely one light input surface (5), each light source (2) and its assigned light input surface (5) being brought into a relative position according to the method steps a) to d).

5. Method according to one of claims 1 to 4, **characterized in that** the displacement in step d) takes place in a plane arranged perpendicular to the main radiation axis (4).

6. Method according to one of the claims 1 to 5, **characterized in that** the at least one light coupling surface (5) comprises a center point (8) which is at an actual distance from the main radiation axis (4), in step c) additionally a desired distance of the center point (8) from the main radiation axis (4) is determined from the predetermined desired value of the illuminance and is used in calculating the relative position, and in step d) additionally the center point (8) is spaced apart from the main radiation axis (4) by the desired distance.

7. Method according to one of claims 1 to 6, **characterized in that** the light generated by the at least one light source (2) is described by a photometric quantity which has its greatest value along the main radiation axis (4) and is used in method steps a), b) and d), the photometric quantity preferably being a luminous intensity, the luminous intensity being used in method steps a), b) and d).

8. Method according to any one of claims 1 to 6, **characterized by** additional further steps: steps) fixing the at least one light source (2) in the relative position.

9. Motor vehicle lighting device for emitting a luminous flux adjusted in accordance with the method according to one of claims 1 to 8, comprising at least one light source (2) for generating light and an optical device (3) associated with the at least one light source (2), wherein the at least one light source (2) is assigned a main radiation axis (4), the optical device (3) of the at least one light source (2) is arranged in the direction of the axis (4) and comprises at least one light coupling surface (5) which is illuminated with the light, through which substantially all of the light is coupled into the optical device (3), wherein the at least one light source (2) and the at least one light coupling surface (5) are deflected from their zero position into a relative position, wherein in the zero position the main radiation axis (4) pierces the light injection surface (5) at a center point (8) of the latter and the light injection surface (5) is illuminated with a zero position illuminance and in the relative position the center point (8) is spaced from the main radiation axis (4) by a distance and the light injection surface (5) is illuminated with a predetermined desired illuminance, **characterized in that** the desired illuminance is 10% to 50% less than the zero position illuminance.

10. Motor vehicle lighting device according to claim 9, **characterized in that**, in the zero position, the at least one light coupling surface (5) is oriented essentially perpendicular to the main radiation axis (4).

11. Motor vehicle lighting device according to claim 9 or 10, **characterized in that** in the relative position the at least one light input surface (5) is oriented substantially perpendicular to the main radiation axis (4).

12. Motor vehicle lighting device according to claim 9, **characterized in that** the desired illumination intensity differs from the zero position illumination intensity by about 20% to 40%, preferably by about 30%.

13. Motor vehicle lighting device according to one of the claims 9 to 12, **characterized in that** the motor vehicle lighting device (1) has a printed circuit board (6), the at least one light source (2), preferably all light sources, are formed as LEDs, and the LED(s) are fixed on the printed circuit board (6) according to the relative position or are fixed in their zero position on the printed circuit board (6) and the printed circuit board (6) is displaced and fixed in the motor vehicle lighting device (1) according to the relative position.

14. Motor vehicle lighting device according to any one of claims 9 to 13, **characterized in that** the light generated by the at least one light source (2) is described by a photometric quantity which has its greatest value along the main radiation axis (4), the photometric quantity preferably being a luminous intensity.

15. Motor vehicle with at least one motor vehicle lighting device according to any one of claims 9 to 14.

## Revendications

1. Procédé de réglage d'un flux lumineux émis par un dispositif d'éclairage de véhicule à moteur (1), le dispositif d'éclairage de véhicule à moteur comprenant au moins une source de lumière (2) pour générer de la lumière et un dispositif optique (3) associé à la au moins une source de lumière (2), dans lequel un axe de rayonnement principal (4) est associé à la au moins une source de lumière (2), le dispositif optique (3) est disposé en aval de la au moins une source de lumière (2) dans la direction de l'axe de rayonnement principal (4) et présente au moins une surface de couplage de lumière (5) qui est éclairée par la lumière et à travers laquelle sensiblement toute la lumière est couplée dans le dispositif optique (3), **caractérisé par** les étapes suivantes :
a) déterminer une valeur réelle d'une intensité d'illumination avec laquelle le au moins un la surface de couplage de lumière (5) est éclairée par la au moins une source de lumière (2),
b) comparer la valeur réelle avec une valeur souhaitée prédéterminée,
c) calculer une position relative entre la au moins une surface de couplage de lumière (5) et la au moins une source de lumière (2) en mettant en équation la valeur réelle avec la valeur de consigne, et
d) amener la au moins une surface de couplage de lumière (5) et la au moins une source de lumière (2) dans la position relative dans laquelle la valeur réelle de l'éclairement est égale à la valeur souhaitée, en déplaçant la au moins une surface de couplage de lumière (5) et la au moins une source de lumière (2) l'une par rapport à l'autre.

2. Procédé selon la revendication 1, **caractérisé en ce que** la au moins une surface d'entrée de lumière (5) est orientée sensiblement perpendiculairement à l'axe de rayonnement principal (4), et à l'étape c) la au moins une surface d'entrée de lumière (5) est orientée sensiblement perpendiculairement à l'axe de rayonnement principal (4).

3. Procédé selon la revendication 1 et 2, **caractérisé en ce que** la au moins une surface d'entrée de lumière (5) est orientée sensiblement perpendiculairement à l'axe d'émission principal (4), dans lequel pendant le déplacement à l'étape d) la au moins une surface d'entrée de lumière (5) est maintenue orientée sensiblement perpendiculairement à l'axe d'émission principal (4).

4. Procédé selon l'une quelconque des revendications 1 à 3, **caractérisé en ce que** le dispositif d'éclairage de véhicule automobile (1) comprend une pluralité de sources lumineuses (2), le dispositif optique (3) présente une pluralité de surfaces d'entrée de lumière (5) et une surface d'entrée de lumière (5) est précisément attribuée à chaque source lumineuse (2), chaque source lumineuse (2) et la surface d'entrée de lumière (5) qui lui est attribuée étant amenées dans une position relative selon les étapes de procédé a) à d).

5. Procédé selon l'une quelconque des revendications 1 à 4, **caractérisé en ce que** le déplacement à l'étape d) a lieu dans un plan perpendiculaire à l'axe principal de rayonnement (4).

6. Procédé selon l'une des revendications 1 à 5, **caractérisé en ce que** l'au moins une surface de couplage de lumière (5) présente un point central (8) qui se trouve à une distance réelle de l'axe de rayonnement principal (4), à l'étape c), on détermine en outre une distance de consigne du point central (8) par rapport à l'axe de rayonnement principal (4) à partir de la valeur de consigne prédéterminée de l'éclairement et on l'utilise pour le calcul de la position relative, et à l'étape d), on écarte en outre le point central (8) de l'axe de rayonnement principal (4) de la distance de consigne.

7. Procédé selon l'une quelconque des revendications 1 à 6, **caractérisé en ce que** la lumière générée par la au moins une source lumineuse (2) est décrite par une grandeur photométrique qui a sa plus grande valeur le long de l'axe principal d'émission (4) et qui est utilisée dans les étapes a), b) et d) du procédé, la grandeur photométrique étant de préférence une intensité lumineuse, l'intensité lumineuse étant utilisée dans les étapes a), b) et d) du procédé.

8. Procédé selon l'une quelconque des revendications 1 à 6, **caractérisé par** d'autres étapes supplémentaires : étapes) fixation de la au moins une source de lumière (2) dans la position relative.

9. Dispositif d'éclairage de véhicule automobile pour émettre un flux lumineux réglé selon le procédé selon l'une des revendications 1 à 8, comprenant au moins une source lumineuse (2) pour générer de la lumière et un dispositif optique (3) associé à la au moins une source lumineuse (2), **caractérisé en ce que** un axe d'émission principal (4) est affecté à l'au moins une source de lumière (2), le dispositif optique (3) de l'au moins une source de lumière (2) est disposé dans la direction de 1 (4) et comprend au moins une surface de couplage de la lumière (5) qui est éclairée par la lumière, à travers laquelle sensiblement toute la lumière est couplée dans le dispositif optique (3), dans lequel la au moins une source de lumière (2) et la au moins une surface de couplage de lumière (5) sont déviées de leur position zéro à une position relative dans laquelle, dans la position zéro, l'axe de rayonnement principal (4) traverse la surface d'injection de lumière (5) en un point central (8) de celle-ci et la surface d'injection de lumière (5) est éclairée avec un éclairement de position zéro et, dans la position relative, le point central (8) est espacé de l'axe de rayonnement principal (4) d'une certaine distance et la surface d'injection de lumière (5) est éclairée avec un éclairement souhaité prédéterminé, **caractérisée en ce que** l'éclairement souhaité est inférieur de 10 à 50 % à l'éclairement de la position zéro.

10. Dispositif d'éclairage de véhicule automobile selon la revendication 9, **caractérisé en ce que**, dans la position zéro, la au moins une surface de couplage de lumière (5) est orientée essentiellement perpendiculairement à l'axe de rayonnement principal (4).

11. Dispositif d'éclairage de véhicule automobile selon la revendication 9 ou 10, **caractérisé en ce que**, dans la position relative, la au moins une surface d'injection de lumière (5) est orientée sensiblement perpendiculairement à l'axe principal d'émission (4).

12. Dispositif d'éclairage de véhicule automobile selon la revendication 9, **caractérisé en ce que** l'intensité d'éclairage souhaitée diffère de l'intensité d'éclairage de la position zéro d'environ 20% à 40%, de préférence d'environ 30%.

13. Dispositif d'éclairage de véhicule automobile selon l'une quelconque des revendications 9 à 12, **caractérisé en ce que** le dispositif d'éclairage de véhicule automobile (1) comprend une carte de circuit imprimé (6), la au moins une source de lumière (2), de préférence toutes les sources de lumière, sont formées comme des DEL, et la ou les DEL sont fixées sur la carte de circuit imprimé (6) selon la position relative ou sont fixées dans leur position zéro sur la carte de circuit imprimé (6) et la carte de circuit imprimé (6) est déplacée et fixée dans le dispositif d'éclairage de véhicule automobile (1) selon la position relative.

14. Dispositif d'éclairage de véhicule automobile selon l'une quelconque des revendications 9 à 13, **caractérisé en ce que** la lumière générée par la au moins une source lumineuse (2) est décrite par une grandeur photométrique qui a sa plus grande valeur le long de l'axe principal d'émission (4), la grandeur photométrique étant de préférence une intensité lumineuse.

15. Véhicule automobile comprenant au moins un dispositif d'éclairage de véhicule automobile selon l'une quelconque des revendications 9 à 14.
